# EUROPÄISCHE PATENTSCHRIFT

(11) **EP 1 197 646 B1**
(45) Veröffentlichungstag und Bekanntmachung des Hinweises auf die Patenterteilung: **16.05.2007**
(21) Anmeldenummer: 01123638.7
(22) Anmeldetag: 02.10.2001
(51) Int. Cl.: F02B 37/16, F02B 33/44

(54) **Brennkraftmaschine**
Internal combustion engine
Moteur à combustion interne

(30) Priorität: 12.10.2000 AT 17312000
(43) Veröffentlichungstag der Anmeldung: 17.04.2002
(73) Patentinhaber: GE Jenbacher GmbH & Co OHG, 6200 Jenbach (AT)
(72) Erfinder: Robitschko, Reinhard, 6200 Jenbach (AT)
(74) Vertreter: Torggler, Paul Norbert

(56) Entgegenhaltungen:
- EP-A- 0 068 517
- EP-A- 0 468 676
- EP-A- 1 008 736
- DE-A- 4 215 046
- US-A- 5 866 859

## Beschreibung

Die vorliegende Erfindung betrifft eine Brennkraftmaschine, insbesondere einen stationären Gasmotor mit einem Verdichter und einem um den Verdichter herumführenden Bypass.

In Gas-Otto-Motoren mit Gemischaufladung kann es zu unkontrollierten Entzündungen des Gemisches in den Gemischleitungen kommen. Dabei wird das im Bereich zwischen Luftansaugung und Einlaßventilen befindliche Gemisch schlagartig verbrannt (Verpuffung, Deflagration, Detonation, Explosion, usw.). Motorkomponenten können dadurch zerstört werden. Die Verbrennung nimmt ihren Ausgang im Bereich des Motorblocks bzw. im Bereich der Einlaßventile. Die Flammenfront der Verbrennung läuft dabei entlang der durch die Gemischleitungen gegebenen Wegsamkeiten. Hierbei kann es bei mit Verdichtern ausgerüsteten Gas-Otto-Motoren insbesondere zur Zerstörung des Verdichters und weiterer Komponenten kommen, wenn die Flammenfront der Verbrennung über den Bypass direkt den Verdichter erreicht. Zur Verhinderung dieser ungewollten Verpuffung bzw. Verbrennung wird ein sogenannter Verpuffungsschutz verwendet. In der DE 19856993 A1 wird direkt vor jedem Ventil der gasbetriebenen Brennkraftmaschine je ein Verpuffungsschutz angebracht. Diese Anordnung der Verpuffungsschutze besitzt jedoch den Nachteil, daß der Wirkungsgrad der Brennkraftmaschine herabgesetzt wird.

Aufgabe der Erfindung ist es, einen Verpuffungsschutz so in den Gemischleitungen anzuordnen, daß dadurch keine zusätzliche Herabsetzung des Wirkungsgrades der Brennkraftmaschine hervorgerufen wird.

Die erfindungsgemäße Brennkraftmaschine ist dadurch gekennzeichnet, daß mindestens ein Verpuffungsschutz im Bypass angeordnet ist.

Durch diese erfindungsgemäße Anordnung eines Verpuffungsschutzes wird der Verdichter und andere Komponenten bei ungewollten Verpuffungen oder Verbrennungen im Bypass wirksam geschützt. Des weiteren wird durch die Anordnung des Verpuffungsschutzes im Bypass kein relevanter Leistungsverlust bei der Brennkraftmaschine hervorgerufen.

Die Effektivität des Verpuffungsschutzes wird besonders dadurch verbessert, daß der Bypass im Bereich des Verpuffungsschutzes einen aufgeweiteten Querschnitt aufweist. Durch diesen vergrößerten Wirkungsquerschnitt wird zum einen eine bessere Wärmeableitung bei Verpuffung erreicht, zum anderen wird der Gasstrom durch den größeren Strömungsquerschnitt weniger stark behindert.

Ein zentrales Merkmal der erfindungsgemäßen Brennkraftmaschine ist es, daß dem Verdichter ein Gemischkühler nachgeschaltet ist. Neben der bezeichnungsgemäßen Hauptaufgabe des Gemischkühlers kommt ihm zusätzlich die Funktion eines Verpuffungsschutzes in der Hauptleitung des Brennstoffgasgemisches zu. Diese zusätzliche Funktion wird durch die große Oberfläche innerhalb des Gemischkühlers bewirkt. Durch die erfindungsgemäße Anordnung des Verpuffungsschutzes im Bypass und des Gemischkühlers in der Hauptleitung des Gemisches ist ein effektiver Verpuffungsschutz für das Gesamtsystem gegeben, ohne daß dabei eine nachteilige Herabsetzung des Wirkungsgrades der Brennkraftmaschine erzeugt wird.

Eine konstruktiv besonders einfache Variante sieht vor, daß der Verpuffungsschutz mindestens ein Gitternetz aufweist. Alternativ kann der Verpuffungsschutz mindestens zwei vorzugsweise gekreuzt angeordnete Gitternetze aufweisen. Diese Gitternetze müssen aus gut wärmeleitendem Material insbesondere Metall gefertigt sein. Durch diese Ausbildung des Verpuffungsschutzes wird ein effektiver Schutz der Brennkraftmaschine vor Zerstörungen durch ungewollte Verpuffungen erreicht.

Weitere Merkmale und Einzelheiten der vorliegenden Erfindung ergeben sich aus der nachfolgenden Figurenbeschreibung. Dabei zeigt
Fig. 1 eine erfindungsgemäße schematisch dargestellte Brennkraftmaschine,
Fig. 2 eine Seitenansicht auf den aufgeweiteten Querschnitt des Bypass im Bereich des Verpuffungsschutzes
Fig. 3 eine schematisierte Draufsicht auf ein liegendes Gitternetz
Fig. 4 eine schematische Seitenansicht des Verpuffungsschutzes mit zwei darin angeordneten Gitternetzen.

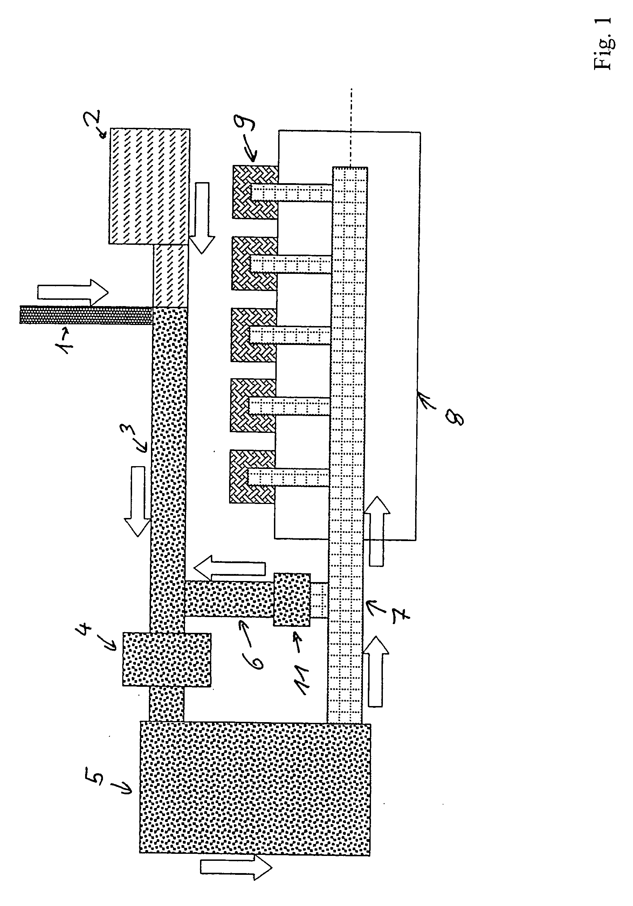

Bei der in Fig. 1 dargestellten Brennkraftmaschine wird die Frischluft 2 mit dem brennbaren Gas 1 gemischt und in der gemischführenden Leitung 3 dem Verdichter 4 zugeführt. Im Anschluß strömt das Luft-Gas-Gemisch durch den Gemischkühler 5 in die gemischführende Leitung 7 zum Motorblock 8 mit den Einlaßventilen 9. Über den Bypass 6 wird überschüssiges Gemisch im Anschluß an den Gemischkühler 5 wieder in die Gemischleitung 3 vor den Verdichter 4 geleitet. Im Bypass 6 ist erfindungsgemäß der Verpuffungsschutz 11 angeordnet.

Kommt es nun im Bereich des Motorblocks 8 oder der Einlaßventile 9 zu ungewollten Verpuffungen, so breiten sich diese entlang der Gemischleitung 7 in Richtung Gemischkühler 5 und Bypass 6 aus. Durch den erfindungsgemäßen Verpuffungsschutz 11 und den Gemischkühler 5 wird die sich ausbreitende Verpuffung effektiv gestoppt und der Verdichter 4 sowie die anderen vorgeschalteten Komponenten des Motors sind vor Schäden durch ungewollte Verpuffungen geschützt.

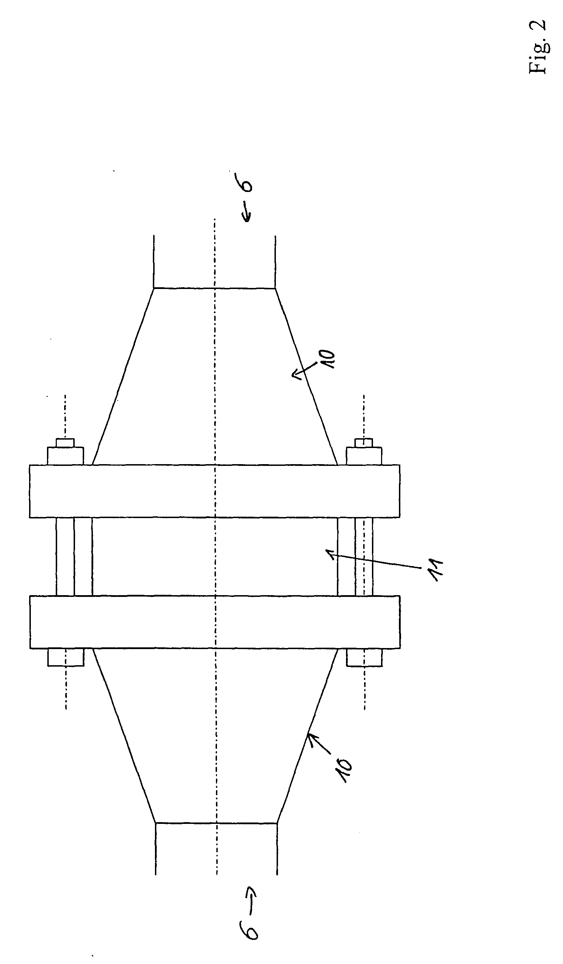

Fig. 2 zeigt eine Ausführungsvariante des geweiteten Querschnitts des Bypasses 6 im Bereich des Verpuffungsschutzes 11. Der Verpuffungsschutz 11 ist zwischen zwei konischen Rohrstücken 10 angeordnet. Durch diese konische Rohrstücke 10 wird die Aufweitung des Bypasses 6 erreicht.

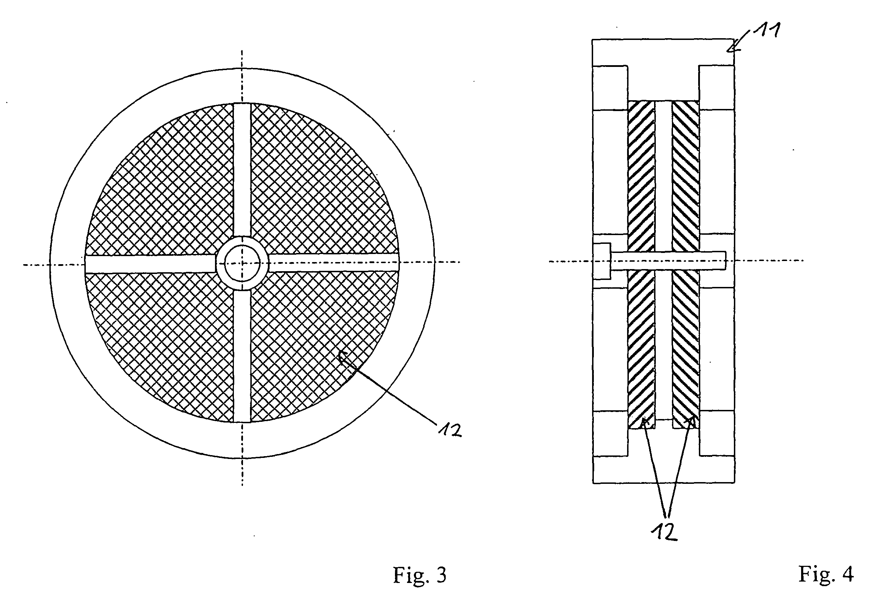

Fig. 3 zeigt, daß aus gut wärmeleitendem Material, vorzugsweise Metall, ausgebildete Gitternetz, welches durch rasche Wärmeableitung eine ankommende Verpuffungsfront stoppt.

In der Seitenansicht in Fig. 4 sind im Verpuffungsschutz 11 zwei Gitternetze 12 gekreuzt angeordnet.

## Patentansprüche

1. Brennkraftmaschine, insbesondere stationärer Gasmotor, mit einem Verdichter (4) und einem um den Verdichter (4) herumführenden Bypass (6), **dadurch gekennzeichnet, daß** mindestens ein Verpuffungsschutz (11) im Bypass (6) angeordnet ist.

2. Brennkraftmaschine nach Anspruch 1, **dadurch gekennzeichnet, daß** der Bypass (6) im Bereich des Verpuffungsschutzes (11) einen aufgeweiteten Querschnitt aufweist.

3. Brennkraftmaschine nach Anspruch 1 oder 2, **dadurch gekennzeichnet, daß** dem Verdichter (4) ein Gemischkühler (5) nachgeschaltet ist.

4. Brennkraftmaschine nach einem der Ansprüche 1 bis 3, **dadurch gekennzeichnet, daß** der Verpuffungsschutz (11) mindestens ein Gitternetz (12) aufweist.

5. Brennkraftmaschine nach einem der Ansprüche 1 bis 3, **dadurch gekennzeichnet, daß** der Verpuffungsschutz (11) mindestens zwei vorzugsweise gekreuzt angeordnete Gitternetze (12) aufweist.

## Claims

1. Internal combustion engine, in particular stationary gas engine, with a super-charger (4) and a bypass (6) going around the super-charger, **characterized in that** at least one detonation protector (11) is arranged in the bypass (6).

2. Internal combustion engine according to claim 1, **characterized in that** the bypass (6) has a widened cross-section in the area of the detonation protector (11).

3. internal combustion engine according to claim 1 or 2, **characterized in that** the super-charger (4) has a mixture cooler (5) connected after it.

4. Internal combustion engine according to one of claims 1 to 3, **characterized in that** the detonation protector (11) is provided with at least one grid (12).

5. Internal combustion engine according to one of claims 1 to 3, **characterized in that** the detonation protector (11) has at least two grids (12) preferably arranged in crossing relationship.

## Revendications

1. Machine à combustion interne, en particulier moteur à gaz fixe, comprenant un compresseur (4) et une dérivation (6) contournant le compresseur (4), **caractérisée en ce qu'**au moins une protection anti-déflagration (11) est disposée dans la dérivation (6).

2. Machine à combustion interne selon la revendication 1, **caractérisée en ce que** la dérivation (6) présente une section élargie dans la zone de la protection anti-déflagration (11).

3. Machine à combustion interne selon la revendication 1 ou 2, **caractérisée en ce qu'**un refroidisseur de mélange (5) est placé en aval du compresseur (4).

4. Machine à combustion interne selon l'une quelconque des revendications 1 à 3, **caractérisée en ce que** la protection anti-déflagration (11) présente au moins un treillis (12).

5. Machine à combustion interne selon l'une quelconque des revendications 1 à 3, **caractérisée en ce que** la protection anti-déflagration (11) présente au moins deux treillis (12) disposés de préférence en croix.
